# EUROPÄISCHE PATENTSCHRIFT

(11) **EP 2 224 340 B1**
(45) Veröffentlichungstag und Bekanntmachung des Hinweises auf die Patenterteilung: **21.12.2011**
(21) Anmeldenummer: 10166470.4
(22) Anmeldetag: 26.01.2007
(51) Int. Cl.: G06F 11/10

(54) **Verfahren und Managementsystem zum Konfigurieren eines dynamischen Informationssystems sowie Computerprogrammprodukt**
Method and management system for configuring a dynamic information system and computer program product
Procédé et système de gestion concus pour configurer un système d'information dynamique ainsi que produit programme d'ordinateur

(30) Priorität: 23.03.2006 DE 102006013514
(43) Veröffentlichungstag der Anmeldung: 01.09.2010
(62) Teilanmeldung aus: 07726235.0
(73) Patentinhaber: Fujitsu Technology Solutions Intellectual Property GmbH, 80807 München (DE)
(72) Erfinder: Käfer, Gerald, 81739, München (DE); Schmid, Reiner, 80538, München (DE)
(74) Vertreter: Epping - Hermann - Fischer

(56) Entgegenhaltungen:
- EP-A1- 1 117 044
- WO-A-02/093380

## Beschreibung

Die Erfindung betrifft ein Verfahren und ein Managementsystem zum Konfigurieren eines dynamischen Informationssystems sowie ein zur Durchführung des Verfahrens geeignetes Computerprogrammprodukt.

Für viele Anwendungen ist die Zuverlässigkeit, mit der ein Informationssystem seine Dienste zur Verfügung stellt, von großer Bedeutung. Unter einem Informationssystem ist im Rahmen der Anmeldung jedes Information verarbeitende System zu verstehen, also beispielsweise Anwendercomputersysteme, bestehend aus einem oder mehreren Computern, ebenso wie Computersysteme, die Dienste über ein Netzwerk bereitstellen (Serveranordnungen), Steuerungssysteme (Embedded Systems) oder Systeme im Bereich des Pervasive Computing. Bei den Informationssystemen kann es sich um statische Systeme handeln, deren Konfiguration im wesentlichen manuell durch einen Benutzer oder Systemadministrator vorgegeben ist, oder um dynamische Systeme, deren Konfiguration dynamisch und automatisch geändert werden kann. Bei Serveranwendungen sind solche dynamischen Systeme beispielsweise aus dem Bereich Autonomous Computing bekannt. Beim Pervasive Computing können Komponenten oft automatisch detektiert und ad hoc eingebunden werden, wodurch sich, insbesondere bei mobilen Komponenten, eine dynamische Konfiguration des Systems ergibt.

Um die Zuverlässigkeit von Informationssystemen zu erhöhen, werden verschiedene Konzepte verfolgt. Eine Möglichkeit besteht darin, die negativen Auswirkungen eines auftretenden Fehlers zu minimieren oder zu eliminieren. Eine Methode aus dieser Gruppe, die auch als Fault Tolerant Computing bezeichnet wird, ist beispielsweise das redundante Vorhalten von Ersatzkomponenten, die beim Ausfall einer fehlerhaften Komponente deren Funktion möglichst nahtlos übernehmen.

Ein weiteres Konzept besteht darin, bei dem Entwurf eines Systems auf geeignete Komponenten zurückzugreifen, die eine geringe Fehleranfälligkeit aufweisen. Dieser Lösungsweg wird bei statischen Systemen üblicherweise während der Entwurfsphase des Systems im Rahmen einer Qualitätssicherung beschritten. Problematisch dabei ist, dass im Zuge von Umstrukturierungen und Erweiterungen des Systems nicht gewährleistet ist, dass auch dabei in entsprechendem Maße qualitätssichernde Aspekte zur Minimierung der Fehleranfälligkeit des Systems in Betracht gezogen werden. Darüber hinaus kann dieser Lösungsweg nicht ohne weiteres auf dynamisch konfigurierte Systeme übertragen werden, da diese keine entsprechende Entwicklungsphase aufweisen, in der eine statische Konfiguration festgelegt würde.

Aus der WO 02/093380 A1 sind ein System, ein Verfahren und ein Computerprodukt zum automatischen Ausführen einer Zuverlässigkeitsvorhersage für ein komplexes System bekannt. Das System umfasst eine Mehrzahl von Subsystemen und eine Mehrzahl von Komponenten innerhalb jeden Subsystems. Für jede der Komponenten werden Alters- und Fehlerinformationen bestimmt. Gemäß den Alters- und Fehlerinformationen wird ein statistisches Model erzeugt, auf dessen Grundlage zukünftige Fehler der Mehrzahl der Komponenten bestimmt werden.

Aus der EP 1 117 044 A1 ist ein Verfahren zur Bestimmung eines Systemmodels zur Fehlererkennung und -isolation für Computersysteme bekannt. Ein bestimmtes Systemmodel ist anwendbar, um ihm Zusammenhang mit konkreten Testergebnissen wenigstens einen Fehlerkandidaten zu bestimmen, der eine spezifische Komponente eines zu testenden Systems darstellt, die wahrscheinlich einen Fehler des zu testenden Systems verursacht hat.

Es ist daher eine Aufgabe der vorliegenden Erfindung, ein Verfahren zum Konfigurieren von dynamischen Informationssystemen zu schaffen, das auch bei dynamischen Systemen zu einer erhöhten Verfügbarkeit der Dienste des Informationssystems führt. Dabei soll die grundsätzliche Flexibilität des dynamischen Informationssystems erhalten bleiben. Es ist weiter eine Aufgabe, ein Managementsystem für ein Informationssystem und ein Computerprogrammprodukt anzugeben, die zur Durchführung des Verfahrens geeignet sind.

Diese Aufgabe wird durch ein Verfahren nach Anspruch 1, ein Managementsystem nach Anspruch 11 und ein Computerprogrammprodukt nach Anspruch 13 gelöst. Weiterbildungen der Erfindungen sind in den jeweiligen abhängigen Ansprüchen angegeben.

Das Verfahren zum Konfigurieren eines dynamischen Informationssystems weist die folgenden Schritte auf. Es werden Komponenten für das dynamische Informationssystem bereitgestellt, sowie komponentenspezifische Fehleranfälligkeitsdaten zu den einzelnen Komponenten. Es wird eine Systemkonfiguration für das Informationssystem vorgegeben, durch die angegeben ist, welche der bereitgestellten Komponenten eingesetzt werden sollen. Die bereitgestellten Komponenten, die bereitgestellten komponentenspezifischen Fehleranfälligkeitsdaten und/oder die vorgegebenen Systemkonfiguration werden permanent auf Änderungen überprüft. Beim Beobachten einer Änderung wird die Systemkonfiguration des dynamischen Informationssystems gegebenenfalls geändert. Hierzu wird eine neue Systemkonfiguration bestimmt, durch die vorgegeben wird, welche der Komponenten unter Berücksichtigung der beobachteten Änderung in dem dynamischen Informationssystem eingesetzt werden sollen. Es werden Fehleranfälligkeitsinformationen für das dynamische Informationssystem in der neuen Systemkonfiguration abhängig von den komponentenspezifischen Fehleranfälligkeitsdaten die an das dynamische Informationssystem gestellte Anforderungen in Bezug auf Zuverlässigkeit definieren, bestimmt und diese Fehleranfälligkeitsinformationen anhand vorgegebener Bewertungskriterien bewertet. In einem abschließenden Schritt wird das dynamische Informationssystem in der neuen Systemkonfiguration konfiguriert, falls die Fehleranfälligkeitsinformationen die vorgegebenen Bewertungskriterien erfüllen.

Durch das Verfahren wird erreicht, dass zu einer möglichen neuen Systemkonfiguration automatisch anhand der bereitgestellten komponentenspezifischen Fehleranfälligkeitsdaten der einzelnen Komponenten Fehleranfälligkeitsinformationen für das gesamte Informationssystem bestimmt werden. Durch die Bewertung der Fehleranfälligkeitsinformationen anhand der vorgegebenen Bewertungskriterien wird erreicht, dass das dynamische Informationssystem nur dann mit der neuen Systemkonfiguration konfiguriert wird, falls die angegebenen Bewertungskriterien für die Fehleranfälligkeit des Informationssystems erfüllt sind. Auf diese Weise ist für jede Änderung der Komponenten, der komponentespezifischen Fehleranfälligkeitsdaten und der vorgegebene Systemkonfiguration gewährleistet, dass das dynamische Informationssystem die an das System gestellten Ansprüche bezüglich seiner Zuverlässigkeit erfüllt, die durch die vorgegebenen Bewertungskriterien definiert werden.

In einer vorteilhaften Weiterbildung des Verfahrens werden die komponentenspezifischen Fehleranfälligkeitsdaten von einer zentralen Datenbank bereitgestellt. Dieses bietet den Vorteil, die Fehleranfälligkeitsdaten, zum Beispiel anhand von Erfahrungswerten, jederzeit aktualisieren zu können.

In einer weiteren vorteilhaften Ausgestaltung werden die komponentenspezifischen Fehleranfälligkeitsdaten von den Komponenten selber bereitgestellt. Der Vorteil dieser Ausgestaltung ist, dass vom Hersteller angegebene Fehleranfälligkeitsdaten unverwechselbar mit der Komponente verbunden bereitgestellt werden können.

In einer weiteren Ausgestaltung des Verfahrens werden zumindest Teile der komponentenspezifischen Fehleranfälligkeitsdaten in einer zentralen Datenbank vorgehalten und von den Komponenten gespiegelt bereitgestellt. In dieser Ausgestaltung des Verfahrens werden die Vorteile der beiden zuvor genannten Ausführungsformen kombiniert.

In weiteren vorteilhaften Ausgestaltungen des Verfahrens umfassen die komponentenspezifischen Fehleranfälligkeitsdaten eine Fehlerwahrscheinlichkeit und/oder Ausfallwahrscheinlichkeit der Komponente. Besonders bevorzugt ist dabei die Fehlerwahrscheinlichkeit und/oder die Ausfallwahrscheinlichkeit der Komponente abhängig von einer Betriebsdauer der Komponente angegeben. Weiterhin ist vorteilhaft, wenn die komponentenspezifischen Fehleranfälligkeitsdaten eine Statistik über vorherige Ausfälle der Komponente und/oder eine Angabe über zu erwartende Ausfallzeiten bei einem Austausch der Komponente umfassen. Weiterhin ist vorteilhaft, die komponentenspezifischen Fehleranfälligkeitsdaten ganz oder teilweise abhängig von einer Nutzung der Komponente anzugeben. Besonders vorteilhaft ist dabei, Nutzungsinformationen von dem Informationssystem bereitzustellen und die Fehleranfälligkeitsinformationen für das Informationssystem abhängig von den Nutzungsinformationen und den nutzungsabhängigen komponentenspezifischen Fehleranfälligkeitsdaten zu bestimmen. Durch Fehleranfälligkeitsdaten der genannten Art wird vorteilhafterweise eine dem Informationssystem und gegebenenfalls der Nutzungssituation angepasste und damit vertrauenswürdige Bestimmung der Fehleranfälligkeit des gesamten Informationssystem ermöglicht.

Weitere vorteilhafte Ausgestaltungen sind in den abhängigen Ansprüchen offenbart.

Das erfindungsgemäße Managementsystem zum Konfigurieren eines dynamischen Informationssystems umfasst eine Abschätzungseinheit, eingerichtet zum Bestimmen von Fehleranfälligkeitsinformationen über das Informationssystem abhängig von komponentenspezifischen Fehleranfälligkeitsdaten und einer vorgegebenen Systemkonfiguration für das Informationssystem eine Bewertungseinheit, eingerichtet zum Bewerten der Fehleranfälligkeitsinformationen anhand vorgegebener Bewertungskriterien, und eine Einheit zum Ändern der Konfiguration des dynamischen Informationssystems. Das Managementsystem ist ebenso wie das Computerprogrammprodukt dazu eingerichtet, eines der zuvor angegebenen, erfindungsgemäßen Verfahren durchzuführen. Die sich ergebenden Vorteile sind analog zu den des Verfahrens.

In einer besonders bevorzugten Ausführungsform des Managementsystems ist die Bewertungseinheit dazu eingerichtet, der Abschätzungseinheit eine neue Systemkonfiguration zur Bestimmung von Fehleranfälligkeitsinformationen vorzugeben. Diese Ausführungsform ermöglicht vorteilhafterweise ein automatisches Auffinden einer geeigneten oder der geeignetsten Systemkonfiguration abhängig von den zur Nutzung im Informationssystem bereitstehenden Komponenten.

Die Erfindung wird nachfolgend anhand von Ausführungsbeispielen, dargestellt in vier Figuren, näher erläutert. Es zeigt:
- Figur 1: eine schematische Darstellung eines ersten Ausfüh- rungsbeispiels eines erfindungsgemäßen Management- systems zusammen mit einem Informationssystem;
- Figur 2: ein Flussdiagramm einer Ausführungsform eines er- findungsgemäßen Verfahrens;
- Figur 3: ein zweites Ausführungsbeispiel eines erfindungsge- mäßen Managementsystems zusammen mit einem Informa- tionssystem und
- Figur 4: ein ad hoc selbstkonfigurierendes Informationssys- tem, geeignet zur Durchführung des erfindungsgemä- ßen Verfahrens.

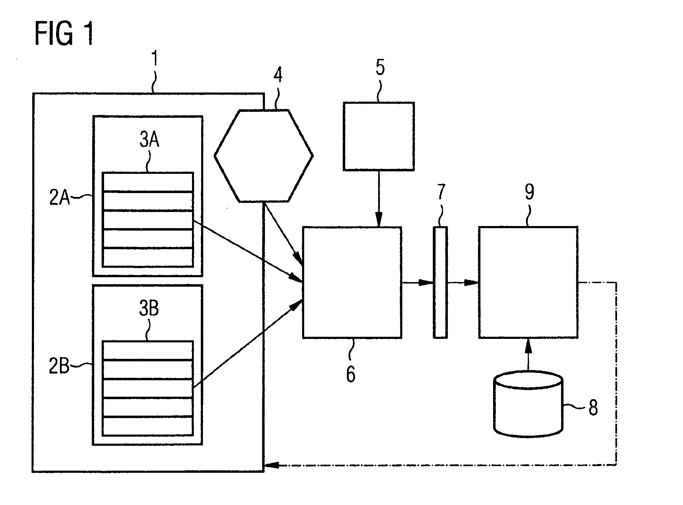

Figur 1 zeigt ein Informationssystem 1, umfassend Komponenten 2A und 2B, die jeweils Fehleranfälligkeitsdaten 3A und 3B aufweisen. Weiterhin umfasst das Informationssystem 1 Nutzungsinformationen 4. Die Fehleranfälligkeitsdaten 3A und 3B und die Nutzungsinformationen 4 werden zusammen mit einer vorgegebenen Systemkonfiguration 5 einer Abschätzungseinheit 6 bereitgestellt. Die Abschätzungseinheit 6 gibt Fehleranfälligkeitsinformationen 7 aus, die zusammen Bewertungskriterien 8 einer Bewertungseinheit 9 bereitgestellt werden. Die Bewertungseinheit 9 ist wiederum mit dem Informationssystem 1 zur Konfiguration des Informationssystems 1 verbunden.

Gleiche oder gleich wirkende Elemente sind in den Figuren mit demselben Bezugszeichen versehen. Mit einem Index (A,B,C) versehene Bezugszeichen weisen auf eine spezifische Komponente 2 oder Fehleranfälligkeitsdaten 3 hin. Wird ein Bezugszeichen ohne Index benutzt, verweist es auf das entsprechende Merkmal im Allgemeinen.

Bei dem in Figur 1 dargestellten Informationssystem kann es sich um einen einzelnen Computer oder auch um ein Computersystem aus mehreren einzelnen Computern handeln. Das Informationssystem 1 kann eine Vielzahl von Komponenten aufweisen, von denen einige obligatorisch, andere optional sind. Hier sind beispielhaft nur zwei Komponenten 2, jeweils mit den Fehleranfälligkeitsdaten 3 dargestellt.

Die Fehleranfälligkeitsdaten 3 sind innerhalb der Komponenten 2 gespeicherte Informationen zur Zuverlässigkeit der Komponente 2. Die Fehleranfälligkeitsdaten 3 tragen nicht unmittelbar zur Funktion der Komponente 2 bei, sondern sind als die Komponente 2 beschreibende Metadaten zu verstehen. Die Fehleranfälligkeitsdaten 3 können beispielsweise Angaben über eine Fehler- und Ausfallwahrscheinlichkeit der Komponente 2 oder Angaben über zu erwartende Ausfallzeiten beim Austausch der Komponente 2 umfassen. Weiterhin können auch Fehlertoleranzangaben vorgesehen sein, die angeben, wie tolerant oder immun die Komponenten 2 gegenüber Fehlern anderer Komponenten sind. Die Angaben können anhand von Abschätzungen vom Hersteller gewonnen und vorgegeben sein und gegebenenfalls um statistische oder empirische Beobachtungen vom Benutzer oder von Benutzergruppen ergänzt oder durch sie ersetzt sein.

Die Angaben können dabei entweder als Konstanten angegeben sein, oder als Funktion von weiteren Parametern. Solche Parameter können die Nutzung der Komponente betreffen, beispielsweise können die Angaben zur Fehler- und Ausfallwahrscheinlichkeit einer Komponente in Abhängigkeit einer Gesamtnutzungsdauer, einer täglichen Nutzungsdauer oder eines Betriebsmodus erfolgen. Ein Beispiel für eine Abhängigkeit der Fehleranfälligkeit vom Betriebsmodus ist ein Festplattenlaufwerk, das mit oder ohne einen vorgesehenen flüchtigen Zwischenspeicher (Cache) für Schreibvorgänge genutzt werden kann. Bei Einsatz des Cache wird das Festplattenlaufwerk mit weniger Schreibzugriffen belastet wird und folglich fehlerunanfälliger sein, als wenn es ohne Cache betrieben wird. In umgekehrter Weise ändert sich die Fehlertoleranz des Festplattenlaufwerks, z.B. gegenüber einem Fehler einer Stromversorgungseinheit, da bei deren Ausfall noch im Cache des Festplattenlaufwerks zwischengespeicherte Daten verloren sind, wenn das Festplattenlaufwerk in dem Modus mit Cache betrieben wird. Weiterhin ist denkbar, die Fehleranfälligkeitsdaten 3 abhängig von Umgebungsparametern, z. B. der Umgebungstemperatur, anzugeben.

Die Komponenten 2 können Software-Komponenten sein, beispielsweise Anwendungs- oder Betriebssystemprogramme oder Aktualisierung von Programmen (Updates, Patches) oder können Hardware-Komponenten sein, beispielsweise Erweiterungskarten oder Peripheriegeräte. Zur Bereitstellung der Fehleranfälligkeitsdaten 3 durch die Komponenten 2 können verschiedene Methoden eingesetzt werden. Bei Software-Komponenten bietet sich eine API (Application Programming Interface)-Schnittstelle an. Für Hardware-Komponenten ist beispielsweise als Schnittstelle für Metadaten das Plug und Play-Interface bekannt, das in einer erweiterten Form auch zur Übermittlung der Fehleranfälligkeitsdaten 3 eingesetzt werden kann. Die Fehleranfälligkeitsdaten 3 können dabei in jedem beliebigen Datenformat vorgehalten und übertragen werden, auf Grund der Erweiterbarkeit und Plattformunabhängigkeit ist jedoch eine Kapselung in eine Beschreibungssprache wie XML (eXtensible Markup Language) vorteilhaft.

Das erfindungsgemäße Managementsystem wird im wesentlichen von der Abschätzungseinheit 6 und der Bewertungseinheit 9 gebildet. Vorteilhafterweise wird das Managementsystem unabhängig vom Informationssystem als eigenständige Einheit ausgeführt, es ist jedoch auch möglich, das Managementsystem als Einheit im Informationssystem 1 vorzusehen. Abhängig von der Ausführung können verschiedene Schnittstellen zum Datenaustausch (Einlesen von Fehleranfälligkeitsdaten 3 und Nutzungsinformationen 4, Ausgeben von Konfigurationsanweisungen) mit dem Informationssystem 1 eingesetzt werden. Insbesondere für Managementsysteme mit einer eigenständigen, von dem Informationssystem 1 unabhängigen Hardware bieten sich bekannte Netzwerkübertragungswege an.

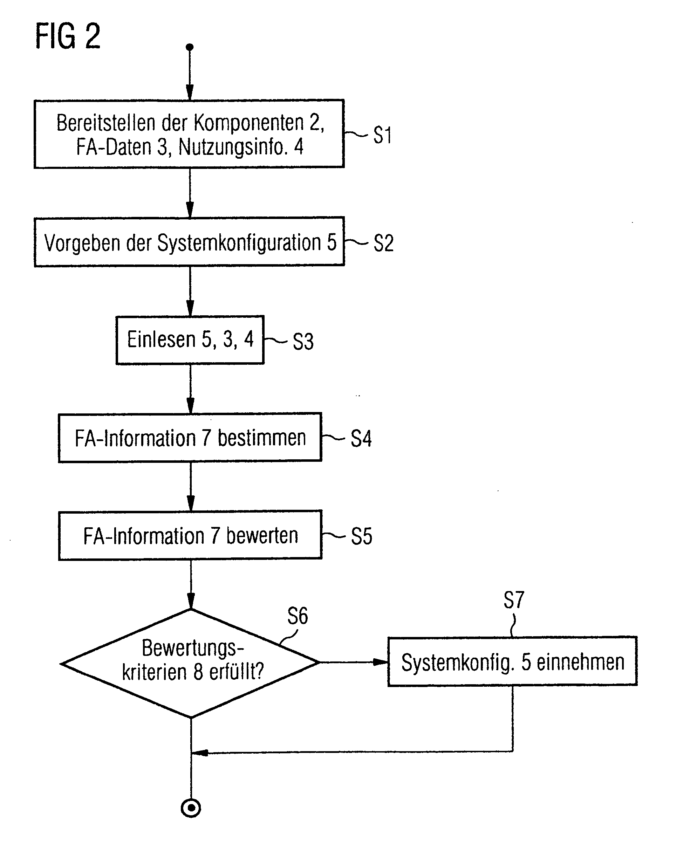

Im folgenden ist im Zusammenhang mit dem Flussdiagramm in Figur 2 ein Ausführungsbeispiel des erfindungsgemäßen Verfahrens, wie es von der in Figur 1 gezeigten Anordnung durchgeführt werden kann, detaillierter dargestellt.

In einem ersten Schritt S1 werden die Komponenten 2 für das Informationssystem 1 zusammen mit ihren Fehleranfälligkeitsdaten 3 bereitgestellt. Dieses kann, wie bereits im Zusammenhang mit Figur 1 beschrieben, dadurch geschehen, dass jede Komponente 2 sie betreffende Fehleranfälligkeitsdaten 3 gespeichert hat. In einer alternativen Ausführungsform ist denkbar, dass die Fehleranfälligkeitsdaten 3 nicht von der Komponente 2 selber vorgehalten werden, sondern in einer Datenbank gespeichert sind. In einer weiteren Ausführungsform ist ein kombiniertes System derart denkbar, dass Fehleranfälligkeitsdaten 3 von den Komponenten 2 vorgehalten werden können, aber gegebenenfalls um Fehleranfälligkeitsdaten 3 aus einer Datenbank ergänzt oder aktualisiert werden. Um in einem solchen System einen einheitlichen Zugriff auf Fehleranfälligkeitsdaten 3 zu ermöglichen, ist denkbar, dass die in der Datenbank vorgehaltenen Fehleranfälligkeitsdaten 3 von den Komponenten 2 aus der Datenbank abgerufen werden und von der Komponente auf gleiche Art bereitgestellt werden, wie die innerhalb der Komponenten gespeicherten Fehleranfälligkeitsdaten 3 (gespiegelte Fehleranfälligkeitsdaten 3). Weiterhin werden in dem Schritt S1 die Nutzungsinformationen 4 vom Informationssystem 1 bereitgestellt.

In einem Schritt S2 wird eine Systemkonfiguration 5 für das Informationssystem 1 vorgegeben. Die Systemkonfiguration 5 umfasst dabei zumindest Informationen darüber, welche der bereitgestellten Komponenten 2 im Informationssystem 1 eingesetzt werden bzw. eingesetzt werden sollen. Darüber hinaus können Informationen vorgesehen sein, auf welche Art und Weise die eingesetzten Komponenten 2 miteinander zusammenwirken. Es ist jedoch auch möglich, dass sich dieses implizit aus der Art der ausgewählten Komponenten ergibt.

Eine Angabe der Systemkonfiguration 5 kann auf verschiedene Weise erfolgen. Zum Einen ist eine Angabe auf betriebssystemspezifische Weise möglich, z. B. gemäß WS-Management (Web Services for Management) der Firma Microsoft. Zum Anderen ist der Einsatz eines betriebssystemunabhängigen Standards denkbar, wie beispielsweise CIM (Computer Interface Model) des DMTF (Distributed Management Task Force) Konsortium oder WSDM (Web Services Distributed Management) der OASIS (Organization for the Advancement of Structured Information Standards) Organization.

In einem Schritt S3 werden sowohl die Systemkonfiguration 5, als auch die Fehleranfälligkeitsdaten 3 der gemäß der Systemkonfiguration 5 eingesetzten Komponenten 2 und die Nutzungsinformationen 4 von der Abschätzungseinheit 6 eingelesen.

Unter Berücksichtigung der Systemkonfiguration 5 und den Nutzungsinformationen 4 bestimmt die Abschätzungseinheit 6 daraufhin in einem Schritt S4 anhand der Fehlerabschätzungsdaten 3 die Fehlerabschätzungsinformation 7 für das gesamte Informationssystem 1. Zu diesem Zweck eingesetzte Methoden und Algorithmen sind aus der Theorie der Fehlerfortpflanzung und Fehlerabschätzung bekannt. Beispielhaft sei die Theorie der Markov-Ketten erwähnt, die sich als besonders geeignet zur Beschreibung der Fehlerabschätzung innerhalb von Informationssystemen etabliert hat.

Die von der Abschätzungseinheit 6 erstellten Fehleranfälligkeitsinformationen 7 umfassen ähnliche Angaben wie die Fehleranfälligkeitsdaten 3, jedoch nicht auf eine einzelne Komponente 2 sondern auf das gesamte Informationssystem 1 bezogen. Bei den Fehleranfälligkeitsinformationen 7 können Unsicherheitsniveaus mit angegeben sein, die belegen, wie gesichert sich die Fehleranfälligkeitsinformationen 7 aus den entsprechenden Fehleranfälligkeitsdaten 3 ergeben.

Die von der Abschätzungseinheit 6 der Bewertungseinheit 9 übermittelten Fehleranfälligkeitsinformationen 7 werden in einem nächsten Schritt S5 anhand der Bewertungskriterien 8 bewertet. Diese Bewertungskriterien 8 können beispielsweise von einer Datenbank, der so genannten Policy-Datenbank, der Bewertungseinheit 9 zur Verfügung gestellt werden. Die Bewertungskriterien 8 definieren die an ein Informationssystem gestellten Anforderungen im Bezug auf Zuverlässigkeit. Im einfachsten Fall kann es sich z. B. um einen Schwellenwert für eine gerade noch vertretbare Fehlerwahrscheinlichkeit des Informationssystem handeln. Im Allgemeinen werden die Bewertungskriterien 8 vielschichtiger sein und der Komplexität der übertragenen Fehleranfälligkeitsinformationen 7 Rechnung tragen. Eine Bewertung kann beispielsweise auf unterschiedlichen Zeitskalen erfolgen, z. B. indem Bewertungskriterien 8 abhängig von einer Nutzungsdauer angegeben sind. Weiterhin können Ausfallzeiten, die bei bestimmten Fehlern zu erwarten sind, mitberücksichtigt werden. Dabei ist möglich, die zur Verfügung stehenden Mittel zum Beheben eines eventuell auftretenden Fehlers in die Bewertung einfließen zu lassen, z. B. die Frage, ob ein Fehler von einem internen, permanent verfügbaren Servicetechniker behoben werden kann oder ob ein externer, unter Umständen nicht sofort verfügbarer Servicetechniker eingesetzt werden muss.

In einem Schritt S6 wird entschieden, ob die vorgegebene Systemkonfiguration 5 die an sie gestellten und in den Bewertungskriterien 8 repräsentierten Anforderungen an Zuverlässigkeit erfüllt. Nur wenn diese Anforderung erfüllt wird, wird in einem Schritt S7 das Informationssystem 1 mit der Systemkonfiguration 5 konfiguriert. Werden die gestellten Anforderungen nicht erfüllt, endet das Verfahren nach Schritt S6, andernfalls nach erfolgreicher Konfiguration nach Schritt S7.

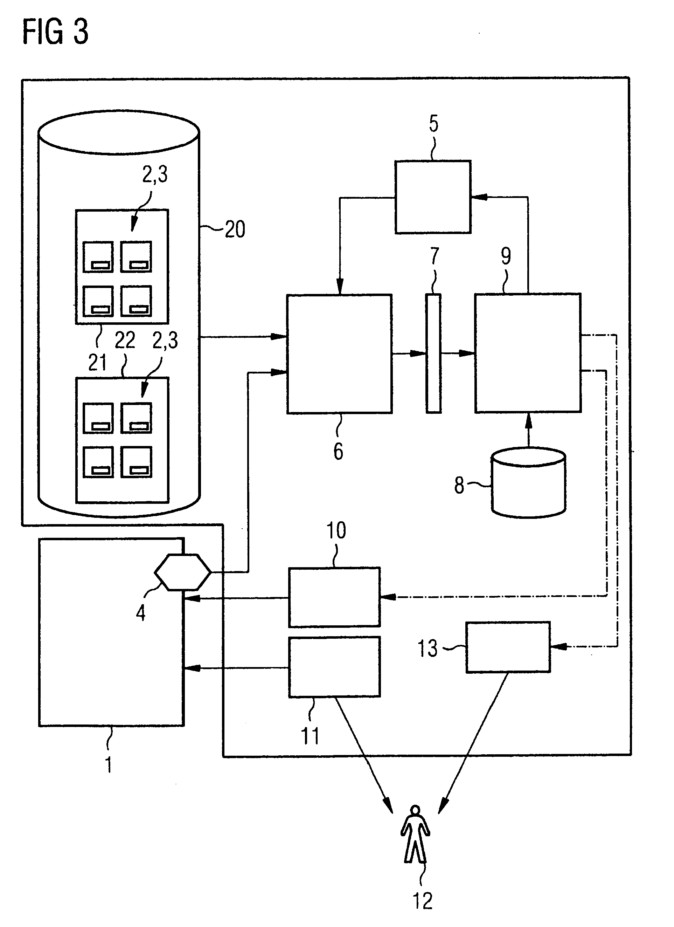

Das Verfahren kann so ausgestaltet sein, dass die Schritte S1 bis S7 einmalig auf Anforderung ausgeführt werden. In der beanspruchten Ausführungsformen werden die bereitgestellten Komponenten 2 und/oder die Fehlerabschätzungsdaten 3 (insbesondere wenn diese nicht von den Komponenten 2 selber, sondern über eine Datenbank bereitgestellt werden) und/oder die vorgegebene Systemkonfiguration 5 permanent auf Änderungen überprüft und die Schritte S3 bis S6 werden nur ausgeführt, wenn solche Änderungen beobachtet wurden. In einer weiter verbesserten Ausführungsform ist denkbar, eine neue Systemkonfiguration jeweils anhand des Bewertungsergebnisses einer vorgegebenen Systemkonfiguration 5 vorzugeben, falls in Schritt S6 festgestellt wird, dass die vorgegebene Systemkonfiguration 5 den an die Zuverlässigkeit des Informationssystems gestellten Anforderungen nicht genügt. Mit der neuen Systemkonfiguration als vorgegebene Systemkonfiguration 5 werden danach S3 bis S6 erneut durchgeführt. Das Verfahren kann so lange iterativ durchgeführt werden, bis eine geeignete Konfiguration gefunden wird, die dann in Schritt S7 angenommen wird. Ein Managementsystem, das zur Durchführung eines solchen Verfahrens eingerichtet ist, wird im folgenden anhand von Figur 3 näher erläutert.

Figur 3 zeigt ein weiteres Ausführungsbeispiel eines erfindungsgemäßen Managementsystems zum Konfigurieren eines Informationssystems. Das in Figur 3 dargestellte System unterscheidet sich von dem in Figur 1 gezeigten vor allem darin, dass eine Komponentendatenbank 20 vorgesehen ist, in der die Komponenten 2 mit den Fehleranfälligkeitsdaten 3 vorgehalten werden. Die Komponenten 2 sind dabei entweder einer ersten Gruppe 21 benötigter Komponenten 2 oder einer zweiten Gruppe 22 optionaler Komponenten 2 zugeordnet. Ein weiterer Unterschied ist, dass die Bewertungseinheit 9 nicht direkt mit dem Informationssystem 1 zum Konfigurieren ist, sondern entweder über eine Einheit zur automatischen Konfiguration 10 oder über eine Einheit zur manuellen Konfiguration 11, die von einer Bedienperson 12 bedient wird. Der Bedienperson 12 wird zu diesem Zweck von der Bewertungseinheit 9 ein Vorschlag zur Systemkonfiguration 13 unterbreitet.

Die in Figur 3 gezeigte Anordnung ist insbesondere geeignet, wenn es sich bei dem Informationssystem 1 um ein größeres Computersystem handelt. Die in der Komponentendatenbank 20 vorgehaltenen Komponenten 2 sind in diesem Falle verständlicherweise Software-Komponenten, also Anwendungen, Updates, Patches. Darüber hinaus können jedoch entweder in der Komponentendatenbank 20 oder in einer weiteren, hier nicht gezeigten Datenbank Fehleranfälligkeitsdaten 3 zu Hardware-Komponenten hinterlegt sein.

Die Bewertungseinheit 9 ist in diesem Ausführungsbeispiel dazu eingerichtet, die Systemkonfiguration 5 vorzugeben. Dazu kann beispielsweise eine Menge an möglichen Systemkonfigurationen vorgegeben sein, aus der in Abhängigkeit der verfügbaren Komponenten 2 in der Komponentendatenbank 20 eine Systemkonfiguration 5 ausgewählt wird. Wie bereits im Zusammenhang mit den Figuren 1 und 2 geschildert, wird für diese vorgegebene Systemkonfiguration 5 dann anhand der komponentenspezifischen Fehleranfälligkeitsdaten 3 benutzter Komponenten 2 sowie der Nutzungsinformationen 4 durch die Bewertungseinheit 6 die Fehleranfälligkeitsinformationen 7 erstellt wird. Diese wird wie zuvor der Bewertungseinheit 9 übermittelt und anhand der Bewertungskriterien 8 von der Bewertungseinheit 9 bewertet. Erfüllt die vorgegebene Systemkonfiguration 5 die gestellten Anforderungen nicht, kann von der Bewertungseinheit 9 eine weitere Systemkonfiguration 5 aus den angegebenen Systemkonfigurationen ausgewählt werden und das Verfahren erneut durchgeführt werden. Auf diese Weise kann iterativ eine geeignete, die gestellten Anforderungen erfüllende Systemkonfiguration oder die Systemkonfiguration, die die gestellten Anforderungen am besten erfüllt oder zumindest die Systemkonfigurationen, die den gestellten Anforderungen am nächsten kommt, gefunden werden. Erfüllt diese Systemkonfiguration die Anforderung uneingeschränkt, weist die Bewertungseinheit 9 die Einheit zur automatischen Konfiguration 10 an, die Systemkonfiguration im Informationssystem 1 umzusetzen.

Unter bestimmten Umständen, die ebenfalls durch die Bewertungskriterien 8 festgelegt sind, wird eine gefundene Systemkonfiguration nicht der Einheit zur automatischen Konfiguration 10 weitergeleitet, sondern zunächst als vorgeschlagene Systemkonfiguration 13 der Bedienperson 12 präsentiert. Ein solcher Fall ist z. B. dann denkbar, wenn die vorgeschlagene Systemkonfiguration 13 die gestellten Bedingungen nur knapp oder gerade nicht erfüllt oder wenn zur Umsetzung der neuen Systemkonfiguration Änderung an Hardware-Komponenten des Informationssystems 1 notwendig sind oder wenn die der vorgeschlagenen Systemkonfiguration zugrunde liegenden Fehleranfälligkeitsinformationen mit einem hohen Unsicherheitsniveau belegt sind.

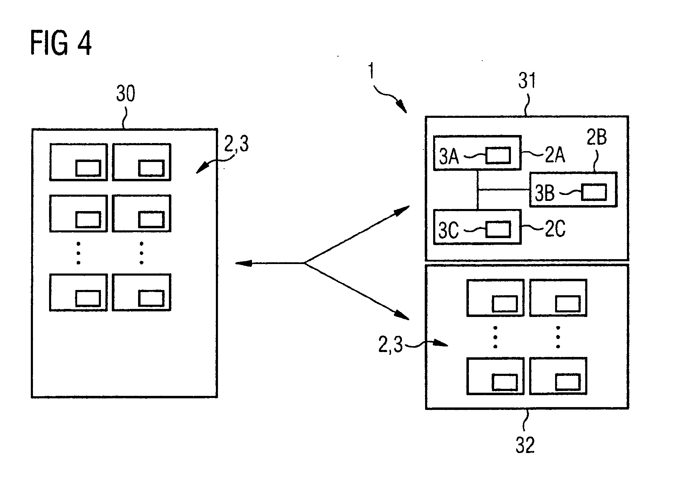

Figur 4 zeigt die Anwendung des erfindungsgemäßen Verfahrens in einem sich ad hoc selbst konfigurierenden dynamischen Informationssystems 1. Solche Systeme finden sich z. B. zunehmend in der Heim- und/oder Gebäudeautomation (Pervasive Computing). Ein solches System kann dabei eine Vielzahl unterschiedlichster Komponenten oder Funktionseinheiten umfassen, die sowohl ortsfeste als auch mobile Geräte sein können. Diese Geräte bedienen sich verschiedener, so genannter Discovery-Techniken, um sich gegenseitig zum Aufbau eines Informationssystems 1 zusammen zu finden. Beispiele solche Techniken sind UPnP (Universal Plug and Play) oder Bluetooth.

In Figur 4 ist auf der linken Seite eine erste Gruppe 30 von Komponenten 2, die sich mittels der genannten Discovery-Techniken gegenseitig aufgefunden haben, dargestellt. Erfindungsgemäß sind die einzelnen Komponenten 2 wiederum mit Fehleranfälligkeitsdaten 3 ausgestattet. Durch aus dem Bereich des Pervasive Computing bekannte Selbstorganisationsmechanismen formiert sich aus der ersten Gruppe 30 aufgefundener Komponenten 2 eine zweite Gruppe 31 eingesetzter Komponenten 2 A-C sowie eine dritte Gruppe 32 redundanter Komponenten 2. Damit das Informationssystem 1 seine Dienste mit einer gewünschten Zuverlässigkeit bereitstellt, sind die Selbstorganisationsmechanismen, die der dynamischen Konfiguration des Informationssystems 1 zugrunde liegen, erfindungsgemäß so ausgestaltet, dass die Fehleranfälligkeitsinformationen 3 A-C, die von den einzelnen Komponenten 2 A-C bereitgestellt werden, während des Konfigurationsprozesses zur Bestimmung von Fehleranfälligkeitsinformationen herangezogen werden, die nach entsprechender Bewertung in den Konfigurationsprozess einbezogen werden können. In ähnlicher Weise wie der Selbstorganisationsprozess in ad hoc selbst konfigurierenden Systemen ein verteilter Prozess ist, wird auch das Zusammentragen der Fehleranfälligkeitsdaten 3 A-C, das Abschätzen von Fehleranfälligkeitsinformationen einer möglichen Systemkonfiguration und deren Bewertung als verteilter Prozess ausgeführt.

## Patentansprüche

1. Verfahren zum Konfigurieren eines dynamischen Informationssystems (1) mit den Schritten
- Bereitstellen von Komponenten (2) für das dynamische Informationssystem (1),
- Bereitstellen von komponentenspezifischen Fehleranfälligkeitsdaten (3) zu den einzelnen Komponenten (3),
- Vorgeben einer Systemkonfiguration (5) für das Informationssystem (1), durch die vorgegeben wird, welche der bereitgestellten Komponenten (2) eingesetzt werden sollen,
- Permanentes Überprüfen der bereitgestellten Komponenten, der bereitgestellten komponentenspezifischen Fehleranfälligkeitsdaten und/oder der vorgegebenen Systemkonfiguration (5) auf Änderungen, und
- Ändern der Systemkonfiguration des dynamischen Informationssystems (1) beim Beobachten einer Änderung im Schritt des Überprüfen durch:
a) Bestimmen einer neuen Systemkonfiguration (5), durch die vorgegeben wird, welche der Komponenten (2) unter Berücksichtigung der beobachteten Änderung in dem dynamischen Informationssystem (1) eingesetzt werden sollen,
b) Bestimmen von Fehleranfälligkeitsinformationen (7) für das dynamische Informationssystem (1) in der neuen Systemkonfiguration (5) abhängig von den komponentenspezifischen Fehleranfälligkeitsdaten (3),
c) Bewerten der bestimmten Fehleranfälligkeitsinformationen (7) anhand vorgegebener Bewertungskriterien (8), die an das dynamische Informationssystem (1) gestellte Anforderungen in Bezug auf Zuverlässigkeit definieren, und
d) Konfigurieren des Informationssystems (1) in der vorgegebenen neuen Systemkonfiguration (5), falls die Fehleranfälligkeitsinformationen (7) die vorgegebenen Bewertungskriterien (8) erfüllen.

2. Verfahren nach Anspruch 1, bei dem die komponentenspezifischen Fehleranfälligkeitsdaten (3) von einer zentralen Datenbank bereitgestellt werden.

3. Verfahren nach Anspruch 1, bei dem die komponentenspezifischen Fehleranfälligkeitsdaten (3) von den Komponenten (2) selber bereitgestellt werden.

4. Verfahren nach Anspruch 3, bei dem die komponentenspezifischen Fehleranfälligkeitsdaten (3) in einer zentralen Datenbank vorgehalten werden und von den Komponenten (2) gespiegelt bereitgestellt werden.

5. Verfahren nach einem der Ansprüche 1 bis 4, bei dem die komponentenspezifischen Fehleranfälligkeitsdaten (3) eine Fehlerwahrscheinlichkeit und/oder eine Ausfallwahrscheinlichkeit der Komponente (2) umfassen.

6. Verfahren nach einem der Ansprüche 1 bis 5, **dadurch gekennzeichnet, dass** die Komponenten (2) Software-Komponenten sind, insbesondere Betriebssystemprogramme, Anwendungen, Updates und/oder Patches.

7. Verfahren nach Anspruch 6, **dadurch gekennzeichnet, dass** die Software-Komponenten durch eine Komponentendatenbank (20) vorgehaltenen werden.

8. Verfahren nach einem der Ansprüche 1 bis 7, **dadurch gekennzeichnet, dass** das die Schritte a) bis c) so lange iterativ durchgeführt werden bis eine geeignete neue Konfiguration (5) gefunden und im Schritt d) eingenommen wird.

9. Verfahren nach Anspruch 8, **dadurch gekennzeichnet, dass** im Schritt a) eine neue Systemkonfiguration (5) jeweils anhand des im Schritt c) ermittelten Bewertungsergebnisses einer vorherigen Systemkonfiguration (5) vorgegeben wird, falls die Fehleranfälligkeitsinformationen (7) die vorgegebenen Bewertungskriterien (8) nicht erfüllen.

10. Verfahren nach einem der Ansprüche 1 bis 8, **dadurch gekennzeichnet, dass** im Schritt a) eine Menge an möglichen Systemkonfigurationen vorgegeben wird, die Schritte b) und c) für eine Mehrzahl von Systemkonfiguration (5) der Menge von Systemkonfigurationen iterativ durchgeführt werden, und im Schritt d) die Systemkonfiguration (5) der Mehrzahl von Systemkonfiguration zum Konfigurieren verwendet wird, die die vorgegebenen Bewertungskriterien (8) am besten erfüllt.

11. Managementsystem zum Konfigurieren eines dynamischen Informationssystems (1), umfassend
- eine Abschätzungseinheit (6), eingerichtet zum Bestimmen von Fehleranfälligkeitsinformationen (7) für das Informationssystem (1) abhängig von komponentenspezifischen Fehleranfälligkeitsdaten (3) und einer vorgegebenen Systemkonfiguration (5) für das Informationssystem (1)
- einer Bewertungseinheit (9), eingerichtet zum Bewerten der Fehleranfälligkeitsinformationen (7) anhand vorgegebener Bewertungskriterien (8), und
- eine Einheit (10, 11) zum Ändern der Konfiguration (5) des dynamischen Informationssystems (1),
wobei das Managementsystem dazu eingerichtet ist, beim Beobachten einer Änderung von bereitgestellten Komponenten (2), bereitgestellten komponentenspezifischen Fehleranfälligkeitsdaten (3) und/oder einer vorgegebenen Systemkonfiguration (5) des dynamischen Informationssystems (1), die Systemkonfiguration (5) des dynamischen Informationssystems gemäß ein Verfahren nach einem der Ansprüche 1 bis 10 zu ändern.

12. Managementsystem nach Anspruch 11, bei dem die Bewertungseinheit (9) dazu eingerichtet ist, der Abschätzungseinheit (6) eine neue Systemkonfiguration (5) zur Bestimmung von Fehleranfälligkeitsinformationen (7) vorzugeben.

13. Computerprogrammprodukt mit Programmcode zur Durchführung eines Verfahrens nach einem der Ansprüche 1 bis 10, wenn der Programmcode auf einem Computer (1) abläuft.

## Claims

1. Method for configuring a dynamic information system (1), having the steps of
- providing components (2) for the dynamic information system (1),
- providing component-specific error susceptibility data (3) relating to the individual components (2),
- predefining a system configuration (5) for the information system (1), which system configuration predefines which of the provided components (2) are intended to be used,
- permanently checking the provided components, the provided component-specific error susceptibility data and/or the predefined system configuration (5) for changes, and
- changing the system configuration of the dynamic information system (1) upon noticing a change in the checking step by:
a) determining a new system configuration (5) which predefines which of the components (2) are intended to be used in the dynamic information system (1) taking into account the noticed change,
b) determining error susceptibility information (7) for the dynamic information system (1) in the new system configuration (5) on the basis of the component-specific error susceptibility data (3),
c) assessing the determined error susceptibility information (7) using predefined assessment criteria (8) which define demands imposed on the dynamic information system (1) with respect to reliability, and
d) configuring the information system (1) in the predefined new system configuration (5) if the error susceptibility information (7) satisfies the predefined assessment criteria (8).

2. The method according to Claim 1, in which the component-specific error susceptibility data (3) are provided by a central database.

3. The method according to Claim 1, in which the component-specific error susceptibility data (3) are provided by the component (2) themselves.

4. The method according to Claim 3, in which the component-specific error susceptibility data (3) are held in a central database and are provided by the components (2) in mirrored form.

5. The method according to one of Claims 1 to 4, in which the component-specific error susceptibility data (3) comprise an error probability and/or a failure probability of the component (2).

6. The method according to one of Claims 1 to 5, **characterized in that** the components (2) are software components, in particular operating system programs, applications, updates and/or patches.

7. The method according to Claim 6, **characterized in that** the software components are held by a component database (20).

8. The method according to one of Claims 1 to 7, **characterized in that** steps a) to c) are iteratively carried out until a suitable new configuration (5) is found and adopted in step d).

9. The method according to Claim 8, **characterized in that** a new system configuration (5) is respectively predefined in step a) using the assessment result of a previous system configuration (5), as determined in step c), if the error susceptibility information (7) does not satisfy the predefined assessment criteria (8).

10. The method according to one of Claims 1 to 8, **characterized in that** a set of possible system configurations is predefined in step a), steps b) and c) are iteratively carried out for a plurality of system configurations (5) in the set of system configurations, and that system configuration (5) in the plurality of system configurations which best satisfies the predefined assessment criteria (8) is used for configuration in step d).

11. Management system for configuring a dynamic information system (1), comprising
- an estimation unit (6) which is set up to determine error susceptibility information (7) for the information system (1) on the basis of component-specific error susceptibility data (3) and a predefined system configuration (5) for the information system (1),
- an assessment unit (9) which is set up to assess the error susceptibility information (7) using predefined assessment criteria (8), and
- a unit (10, 11) for changing the configuration (5) of the dynamic information system (1),
the management system being set up to change the system configuration (5) of the dynamic information system in accordance with a method according to one of Claims 1 to 10 upon noticing a change in provided components (2), provided component-specific error susceptibility data (3) and/or a predefined system configuration (5) of the dynamic information system (1).

12. The management system according to Claim 11, in which the assessment unit (9) is set up to predefine, to the estimation unit (6), a new system configuration (5) for determining error susceptibility information (7).

13. Computer program product having program code for carrying out a method according to one of Claims 1 to 10 when the program code runs on a computer (1).

## Revendications

1. Procédé de configuration d'un système d'information dynamique (1) comprenant les étapes suivantes :
- la fourniture de composants (2) destinés au système d'information dynamique (1),
- la fourniture aux composants individuels (2) de données de taux d'erreur spécifiques des composants (3),
- la spécification, pour le système d'information (1), d'une configuration système (5) permettant de spécifier ceux des composants fournis (2) qui doivent être utilisés,
- la vérification permanente des composants fournis, des données de taux d'erreur spécifiques des composants et/ou de la configuration système spécifiée (5) pour détecter des modifications, et
- la modification de la configuration système du système d'information dynamique (1) lors de l'observation d'une modification pendant l'étape de vérification, cela comprenant :
a) la détermination d'une nouvelle configuration système (5), permettant de spécifier lesquels des composants (2) doivent être utilisés en tenant compte de la modification observée dans le système d'information dynamique (1),
b) la détermination d'informations de taux d'erreur (7) pour le système d'information dynamique (1) dans la nouvelle configuration système (5) selon les données de taux d'erreur (3) spécifiques des composants,
c) l'évaluation des informations de taux d'erreur déterminées (7) sur la base de critères d'évaluation spécifiés (8), qui définissent des exigences imposées au système d'information dynamique (1) en matière de fiabilité, et
d) la configuration du système d'information (1) dans la nouvelle configuration système (5) spécifiée si les informations de taux d'erreur (7) satisfont aux critères d'évaluation (8) spécifiés.

2. Procédé selon la revendication 1, dans lequel les données de taux d'erreur (3) spécifiques des composants sont fournies par une base de données centrale.

3. Procédé selon la revendication 1, dans lequel les données de taux d'erreur (3) spécifiques des composants sont fournies par les composants (2) eux-mêmes.

4. Procédé selon la revendication 3, dans lequel les données de taux d'erreur (3) spécifiques des composants sont conservées dans une base de données centrale et sont fournies en miroir par les composants (2).

5. Procédé selon les revendications 1 à 4, dans lequel les données de taux d'erreur (3) spécifiques des composants comprennent une probabilité d'erreur et/ou une probabilité de défaut des composants (2).

6. Procédé selon les revendications 1 à 5, **caractérisé en ce que** les composants (2) sont des composants logiciels, notamment des programmes de système d'exploitation, des applications, des mises à jour et/ou des correctifs.

7. Procédé selon la revendication 6, **caractérisé en ce que** les composants logiciels sont conservés dans une base de données de composants (20).

8. Procédé selon les revendications 1 à 7, **caractérisé en ce que** les étapes a) à c) sont effectuées de manière itérative jusqu'à ce qu'une nouvelle configuration (5) adéquate soit trouvée et adoptée à l'étape d).

9. Procédé selon la revendication 8, **caractérisé en ce que**, à l'étape a), une nouvelle configuration système (5) est respectivement spécifiée sur la base du résultat d'évaluation obtenu à l'étape c) d'une configuration système précédente (5) si les informations de taux d'erreur (7) ne satisfont pas aux critères d'évaluation (8) spécifiés.

10. Procédé selon les revendications 1 à 8, **caractérisé en ce qu'**un ensemble de configurations système possibles est spécifié à l'étape a), **en ce que** les étapes b) et c) sont effectuées de manière itérative pour une pluralité de configurations système (5) de l'ensemble de configurations système, et **en ce qu'**à l'étape d) on utilise pour la configuration la configuration système (5) de la pluralité de configurations système qui satisfait le mieux aux critères d'évaluation (8) spécifiés.

11. Système de gestion de configuration d'un système d'information dynamique (1) comprenant
- une unité d'évaluation (6), conçue pour déterminer des informations de taux d'erreur (7) pour le système d'information (1) en fonction de données de taux d'erreur (3) spécifiques des composants et d'une configuration système spécifiée (5) pour le système d'information (1),
- une unité d'évaluation (9), conçue pour évaluer les informations de taux d'erreur (7) sur la base de critères d'évaluation spécifiés (8), et
- et une unité (10, 11) destinée à modifier la configuration (5) du système d'information dynamique (1),
dans lequel le système de gestion est conçu pour modifier la configuration système (5) du système d'information dynamique conformément à un procédé selon l'une des revendications 1 à 10 lors de l'observation d'une modification de composants fournis (2), de données de taux d'erreur (3) spécifiques des composants fournies et/ou et d'une configuration système (5) spécifiée du système d'information dynamique (1).

12. Système de gestion selon la revendication 11, dans lequel l'unité d'évaluation (9) est conçue pour spécifier à l'unité d'évaluation (6) une nouvelle configuration système (5) pour la détermination d'informations de taux d'erreur (7).

13. Produit de programme informatique comprenant un code de programme destiné à la mise en oeuvre d'un procédé selon l'une des revendications 1 à 10, lorsque le code de programme s'exécute sur un ordinateur (1).
